# EUROPEAN PATENT SPECIFICATION

(11) **EP 3 473 418 B1**
(45) Date of publication and mention of the grant of the patent: **06.12.2023**
(21) Application number: 17306425.4
(22) Date of filing: 19.10.2017
(51) Int. Cl.: B29D 11/00, B33Y 80/00, B33Y 10/00, B29C 64/40

(54) **METHOD FOR MANUFACTURING AN OPHTHALMIC LENS**
VERFAHREN ZUR HERSTELLUNG EINER OPHTHALMISCHEN LINSE
PROCÉDÉ DE FABRICATION D'UNE LENTILLE OPHTALMIQUE

(43) Date of publication of application: 24.04.2019
(73) Proprietor: Essilor International, 94220 Charenton-le-Pont (FR)
(72) Inventor: MOINE, Jérôme, 94220 Charenton le Pont (FR); FEUILLADE, Mathieu, 94220 Charenton le Pont (FR); BULTEZ, Xavier, 94220 Charenton le Pont (FR)
(74) Representative: Jacobacci Coralis Harle

(56) References cited:
- EP-A1- 3 181 338
- WO-A1-2015/092017
- WO-A1-2016/075563
- WO-A2-2009/041707
- US-A1- 2015 241 714
- US-A1- 2015 277 150
- US-A1- 2016 101 573

## Description

### TECHNICAL FIELD OF THE INVENTION

The invention relates to the manufacturing of ophthalmic lenses.

More precisely the invention relates to a method for manufacturing an ophthalmic lens.

### BACKGROUND INFORMATION AND PRIOR ART

Using an additive manufacturing technology to manufacture an ophthalmic lens is of interest because the obtained ophthalmic lens is directly shaped to fit the frame that shall carry the ophthalmic lens and/or the obtained ophthalmic lens complies with the wearer's optical prescription.

The additive manufacturing process needs to be precisely performed; in particular a new layer needs to be positioned very accurately on the already polymerised layer to correctly manufacture the ophthalmic lens. This delicate process leads to manufacture the ophthalmic lens on a support which will maintain the ophthalmic lens during the whole additive manufacturing process.

Document WO2015092017 describes a method to print a three-dimensional structure, such as an ophthalmic lens, by superposing layers of different materials. The whole printing structure lies on a support and some layers may be removed during the process to get the final three-dimensional structure.

The final three-dimensional structure is not ready for use as the useful surface presents some optical defects due to the contact with the support and other layers. Some heavy post-processing steps on the final structure, such as polishing, are thus necessary.

### SUMMARY OF THE INVENTION

In this context, the invention provides a method for manufacturing an ophthalmic lens using an additive manufacturing technology in order to directly obtain an ophthalmic lens ready for use, without any post-processing treatment.

The invention consists in a method for manufacturing an ophthalmic lens using an additive manufacturing technology as defined in claim 1.

Thanks to the invention, the ophthalmic lens being manufactured is borne by the support contacting the peripheral region. This peripheral region corresponds to a non-useful optical part and the useful optical surface of the ophthalmic lens is manufactured being free from any contact with the support. Thus, this optical surface is manufactured with the correct optical characteristics and is free from any optical defects. Post-processing treatments needed to modify the optical surface of the ophthalmic lens are thus not necessary and the ophthalmic lens can be directly used in a frame. This does not exclude however the possibility to add any type of coating on the ophthalmic lens.

Other advantageous features of the invention as defined in the dependent claims are the following ones:
- said support has a shape complementary to the portion of the peripheral region of the ophthalmic lens;
- said support sustains said part of the ophthalmic lens;
- said part of the ophthalmic lens lies on a bearing surface of said support, the vertical line going through the centre of gravity of said part of the ophthalmic lens intersecting said bearing surface of the support;
- the geometry or the orientation of the support is arranged before the step of manufacturing the ophthalmic lens in order to prevent said part of the ophthalmic lens from collapsing or being deformed while being manufactured;
- the orientation of the support is continuously varied during the step of manufacturing the ophthalmic lens in order to prevent said part of the ophthalmic lens from collapsing or being deformed while being manufactured;
- said support upholds said part of the ophthalmic lens;
- the ophthalmic lens further comprises a discontinuous linking portion between said part of the ophthalmic lens and said support;
- the ophthalmic lens directly obtained from the manufacturing comprises two opposite faces and an edge extending between the two faces, the peripheral region comprising a portion of at least one of the two faces; and
- the ophthalmic lens is configured to be mounted in a rim of a frame, said rim having an inner face, wherein the ophthalmic lens directly obtained from the manufacturing comprises two opposite faces and an edge extending between the two faces, said edge substantially matching the inner face of the rim.

The present disclosure also provides a support designed to bear a part of an ophthalmic lens being manufactured by an additive manufacturing technology, the ophthalmic lens having at least one useful optical surface and a peripheral region surrounding at least in part said useful optical surface, the support being configured so that when the support bears the part of the ophthalmic lens being manufactured by a portion of the peripheral region, the useful optical surface is free from any contact with the support, which does not form part of the present invention.

The support has shape and dimensions determined by features of the useful optical surface of the ophthalmic lens to be manufactured. The support is manufactured using said additive manufacturing technology.

The present disclosure also describes a manufacturing system, which does not form part of the present invention, comprising:
- a support designed to bear a part of an ophthalmic lens being manufactured by an additive manufacturing technology, the ophthalmic lens having at least one useful optical surface and a peripheral region surrounding at least in part said useful optical surface; and
- a device suitable for manufacturing said part of the ophthalmic lens using said additive manufacturing technology,
whereby said support is in contact with a portion of the peripheral region of the part of the ophthalmic lens being manufactured while said useful optical surface is free from any contact with the support.

### DETAILED DESCRIPTION OF EXAMPLE(S)

The following description, given with regard to the appended drawings, which are given by way of non-limiting examples, will allow what the invention consists of and how it can be carried out to be understood.

In the appended drawings:
- Figure 1 shows an exemplary manufacturing system adapted to manufacture an ophthalmic lens;
- Figures 2a, 2b, 2c and 2d schematically show a concave ophthalmic lens at different manufacturing stages according to a first exemplary embodiment of the the method of the invention;
- Figure 3 schematically shows a front view of a concave ophthalmic lens on a support according to the first exemplary embodiment of the invention;
- Figure 4 schematically shows a front view of a convex ophthalmic lens on a support according to a second exemplary embodiment of the invention;
- Figure 5 schematically shows a side view of a convex ophthalmic lens on a support according to the second exemplary embodiment of the invention;
- Figure 6 schematically shows a side view of a convex ophthalmic lens on a support according to a third exemplary embodiment of the invention;
- Figure 7 schematically shows a front view of multiple concave ophthalmic lenses on a support according to a fourth exemplary embodiment of the invention;
- Figure 8 schematically shows a front view of a concave ophthalmic lens on a support according to a fifth exemplary embodiment of the invention; and
- Figures 9a and 9b schematically show a front view of a plurality of ophthalmic lenses at two different manufacturing stages according to a sixth embodiment of the invention.

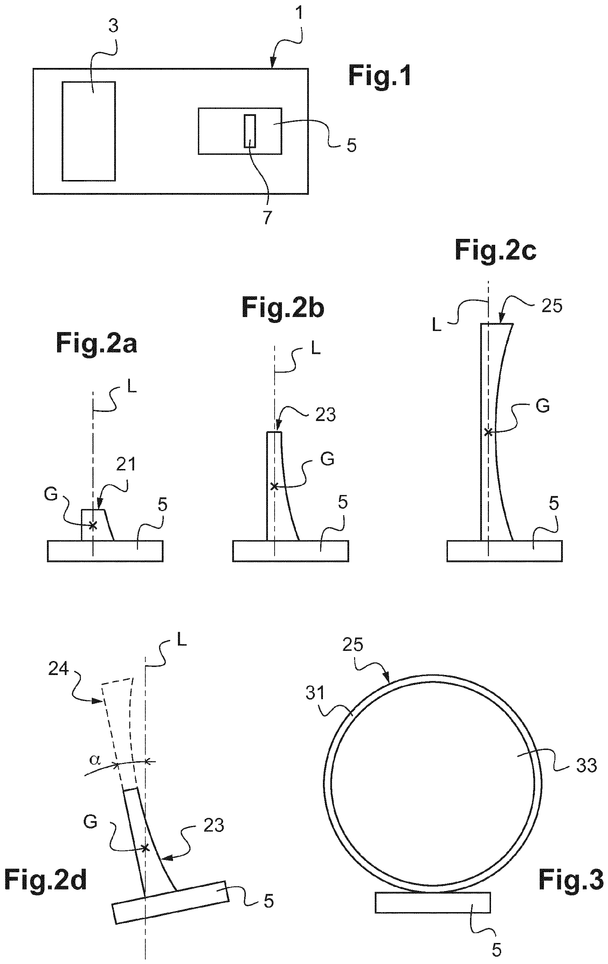

Figure 1 shows a manufacturing system 1 adapted to manufacture an ophthalmic lens.

The manufacturing system 1 comprises a device 3 and a support 5. The device 3 is suitable for manufacturing a part 7 of the ophthalmic lens using an additive manufacturing technology. The expression *"additive manufacturing technology"* refers to processes that manufacture solid objects by juxtaposing volume elements or voxels. In the case of the present invention, the part 7 of the ophthalmic lens is thus manufactured volume element by volume element, layer by layer. The additive manufacturing technology may be in practice stereolithography (SLA) or polymer jetting or continuous liquid interface production (CLIP) technology.

The device 3 comprises a control unit (not shown on Figure 1). This control unit includes a microprocessor and a memory. The memory stores instructions that allow the manufacturing system 1 to implement a method for manufacturing the ophthalmic lens as described below when these instructions are executed by the microprocessor.

The part 7 of the ophthalmic lens comprises at least one useful optical surface and a peripheral region surrounding at least in part said useful optical surface. The part 7 of the ophthalmic lens comprises two opposite faces and an edge extending between the two faces. The peripheral region of the part 7 of the ophthalmic lens comprises at least a portion of the edge and a portion of at least one of the two faces. The peripheral region is a non-useful optical part. The expression *"useful optical surface"* is understood to mean the surface of the ophthalmic lens adapted to modify the propagation and the transmission of an optical beam going through said ophthalmic lens. The useful optical surface is thus the portion of the ophthalmic lens adapted to the wearer's optical prescription. Said differently, the useful optical surface is the portion of the ophthalmic lens that may be crossed by the wearer's gaze direction when the ophthalmic lens is worn by the wearer.

The memory comprised in the device 3 also stores elements for defining the ophthalmic lens to be manufactured, especially features defining the useful optical surface.

The support 5 shown on Figure 1 is designed to sustain the part 7 of the ophthalmic lens being manufactured. The word *"bear*" is understood to mean maintaining the part 7 of the ophthalmic lens in a certain position thanks to the support 5. The word "*bear*" is in no way intended to limit the contact region between the part 7 of the ophthalmic lens and the support 5 to a contact from the bottom of said part 7 of the ophthalmic lens. The support 5 may thus bear the part 7 of the ophthalmic lens from the top of said part 7, as further described below.

In these examples described here, the support 5 is manufactured by the additive manufacturing technology. The support 5 is configured and dimensioned so that when the support bears the part 7 of the ophthalmic lens being manufactured, the useful optical surface is free from any contact with said support 5.

The shape and dimensions of the support 5 are determined considering the features of the useful optical surface of the ophthalmic lens being manufactured. These features include the shape of the manufactured ophthalmic lens (concave or convex) and/or the optical prescription and/or the shape and dimensions of a frame in which the ophthalmic lens will be mounted.

The manufacturing system 1 shown on Figure 1 and described previously is suitable to execute a method for manufacturing an ophthalmic lens using the additive manufacturing technology.

This method comprises a step of providing the support 5 (for instance by producing the support 5 by additive manufacturing) as described previously. The method also comprises a step of manufacturing the part 7 of the ophthalmic lens, using the additive manufacturing technology. During the step of manufacturing, a portion of the peripheral region of the part 7 of the ophthalmic lens is in contact with the support 5 so that the support 5 bears the part 7 of the ophthalmic lens being manufactured. During the step of manufacturing, the useful optical surface is free from any contact with the support 5.

Figures 2a, 2b and 2c schematically show a concave ophthalmic lens at different manufacturing stages according to a first exemplary embodiment of the manufacturing method just mentioned. This first embodiment corresponds to the manufacturing of the ophthalmic lens from the bottom to the top of the ophthalmic lens.

Figure 2a represents a first part 21 of the ophthalmic lens manufactured on the support 5 by the additive manufacturing technology at a first stage of the step of manufacturing. Figure 2b shows a second part 23 of the ophthalmic lens manufactured at a second stage of the step of manufacturing. The second part 23 is obtained from the first part 21 by adding layers by additive manufacturing on the first part 21. Figure 2c shows a final concave ophthalmic lens 25 obtained by adding layers on the second part 23.

The centre of gravity G of the current part (i.e. the first part 21, the second part 23 or the third part 25) of the ophthalmic lens being manufactured is represented on Figures 2a, 2b and 2c.The vertical line L going through the centre of gravity G of said current part (i.e. the first part 21, the second part 23 or the third part 25) is also identified on Figures 2a, 2b and 2c.

As shown on Figures 2a, 2b and 2c, the support 5 bears the concerned part (i.e. the first part 21, the second part 23 or the third part 25) of the ophthalmic lens. Said concerned part (i.e. the first part 21, the second part 23 or the third part 25) of the ophthalmic lens thus lies on a bearing surface of the support 5. The bearing surface is defined as the contact surface between the concerned part (i.e. the first part 21, the second part 23 or the third part 25) of the ophthalmic lens and the support 5. The vertical line L going through the centre of gravity G crosses said bearing surface.

The support 5 is arranged according to the ophthalmic lens to be manufactured. As an example, the support 5 is arranged before the step of manufacturing, depending on the predetermined geometry of the ophthalmic lens to be manufactured. The support 5 is thus arranged in shape and orientation to prevent the concerned part (i.e. the first part 21, the second part 23 or the third part 25) of the ophthalmic lens from collapsing or being deformed while being manufactured.

In the example just described, the support is in a fixed position during the manufacturing process. According to a possible variation, the support 5 may be tilted by a tilt angle α. Figure 2d schematically shows the second stage of manufacturing for which the support has been tilted to prevent the final concave ophthalmic lens from collapsing. The second part 23 is represented with the remaining part 24 to manufacture to obtain the final concave ophthalmic lens 25.

The tilt angle α is determined according to the predetermined geometry of the ophthalmic lens. The centre of gravity G of the part 23 of the ophthalmic lens and the vertical line L going through the centre of gravity G of said part 7 are also identified on Figure 2d. The tilt angle α is defined as the angle between the vertical line L going through the centre of gravity G of the part 23 of the ophthalmic lens and a direction perpendicular to the plane defined by the bearing surface. Said tilt angle α may be fixed during said step of manufacturing. Said tilt angle α corresponds to the optimal angle to prevent the concerned part (i.e. the first part 21, the second part 23 or the third part 25) of the ophthalmic lens from collapsing or being deformed while being manufactured. As an example, on Figures 2a, 2b and 2c, the tilt angle α is substantially at 0°.

As an alternative, the shape and the orientation of the support 5 are continuously varied during the step of manufacturing. As an example, the tilt angle α is continuously modified during the step of manufacturing in order to prevent the part of the ophthalmic lens from collapsing or being deformed at each stage of manufacturing.

As another alternative, the support 5 lies in a resin bath while said part 7 of the ophthalmic lens is manufactured in order to reduce the impact of the gravity. This may for instance be the case when the part 7 of the ophthalmic lens is formed by hardening a resin. The part 7 of the ophthalmic lens is thus plunged into said resin bath. A layer of the resin is polymerised in an upper surface of the resin bath. The support 5 is moved down to polymerise another layer and so on until the ophthalmic lens is completely formed.

Figure 3 shows a front view of a concave ophthalmic lens on a support according to this first exemplary embodiment. The final concave ophthalmic lens 25 comprises a peripheral region 31 and a useful optical surface 33. The peripheral region 31 surrounds the useful optical surface 33. The peripheral region 31 is considered as a non-useful optical surface. The support 5 sustains the final concave ophthalmic lens 25 contacting the peripheral region 31.

As an example, the part 7 of the ophthalmic lens may contact the support 5 via a frangible portion (not shown on Figure 3) possibly made by additive manufacturing. The frangible portion secures the part 7 of the ophthalmic lens to the support 5 and eases later separation of the ophthalmic lens from the support 5.

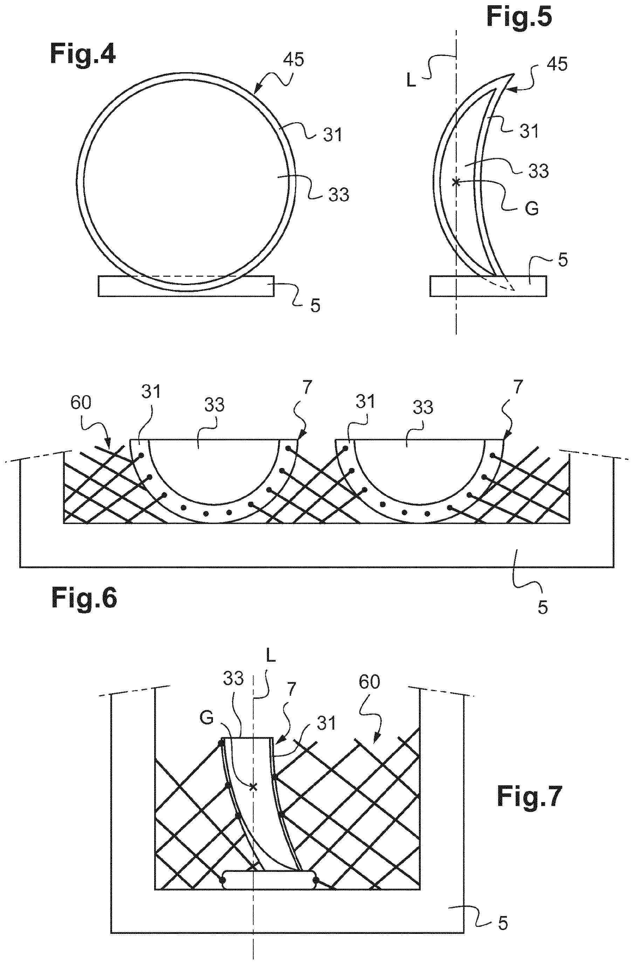

Figure 4 schematically shows a front view of a convex ophthalmic lens on the support according to a second exemplary embodiment of the proposed manufacturing method.

As shown in Figure 4, a final convex ophthalmic lens 45 comprises the peripheral region 31 and the useful optical surface 33. As described previously for the concave ophthalmic lens, the support 5 sustains the final convex ophthalmic lens 45, contacting the peripheral region 31. However, in this case, the support 5 fits closely the peripheral region 31 of the ophthalmic lens. The support 5 has a shape which is complementary to the portion of the peripheral region 31.

Figure 5 schematically shows a side view of the final convex ophthalmic lens on the support according to the second exemplary embodiment. As shown on Figure 5, the final convex ophthalmic lens is sustained by the support 5 by imbedding itself in the support 5. The support 5 is contacting the final convex ophthalmic lens only via the peripheral region 31. The useful optical surface 33 is free from any contact with the support 5.

As an alternative, the contact between the part 7 of the ophthalmic lens via the peripheral region 31 and the support 5 is discontinuous. The ophthalmic lens further comprises a discontinuous linking portion between said part 7 of the ophthalmic lens and said support 5. This continuous linking is adapted to easily remove the manufactured ophthalmic lens from the support.

Figure 6 schematically shows a side view of a convex ophthalmic lens on a support according to a third exemplary embodiment of the invention. According to this embodiment, the stability of the ophthalmic lens being manufactured is realised thanks to a lattice framework 60, as shown on Figure 6. The lattice framework 60 maintains the part 7 of the ophthalmic lens being manufactured by being fixed on the peripheral region 31. The useful optical surface 33 is free from any contact with the lattice framework 60. The lattice framework 60 is adapted to prevent the part 7 of the ophthalmic lens from collapsing or being deformed while being manufactured.

The centre of gravity G of the part 7 of the ophthalmic lens is identified on Figure 6. The vertical line L going through the centre of gravity G of said part 7 is also identified. The vertical line L intersects said bearing surface in order to prevent the part 7 of the ophthalmic lens from collapsing or being deformed while being manufactured.

In the present example, the support 5 is adapted to sustain a plurality of ophthalmic lenses while being manufactured. Only one support 5 sustains the plurality of ophthalmic lenses. As an alternative, the support 5 may be formed by an assembly of several individual supports, each part 7 of the plurality of the ophthalmic lenses being sustained by its own individual support.

Figure 7 schematically shows a front view of multiple concave ophthalmic lenses sustained on the support 5 according to a fourth exemplary embodiment of the invention. The plurality of parts 7 of the ophthalmic lenses comprises the peripheral region 31 and the useful optical surface 33. The support 5 is contacting the plurality of parts 7 of the ophthalmic lenses only via the peripheral region 31. The lattice framework 60 maintains the plurality of parts 7 of the ophthalmic lenses.

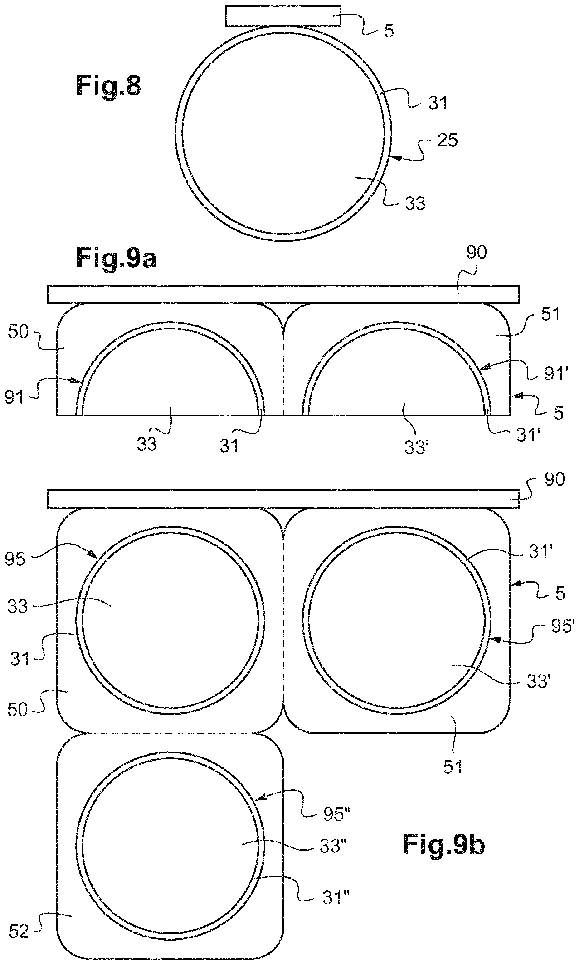

Figure 8 schematically shows a front view of a concave ophthalmic lens on a support according to a fifth exemplary embodiment of the invention. This fifth embodiment corresponds to the manufacturing of the ophthalmic lens from the top to the bottom of the ophthalmic lens. As described in the previous embodiments, the final concave ophthalmic lens 25 also comprises the peripheral region 31 and the useful optical surface 33. The support 5 upholds the final concave ophthalmic lens 25 contacting the peripheral region 31. According to this embodiment, the support 5 is adapted to prevent the part 7 of the ophthalmic lens from falling down or being deformed while being manufactured.

Figures 9a and 9b schematically show a front view of a plurality of ophthalmic lenses at two different manufacturing stages according to a sixth embodiment of the invention. According to this sixth embodiment, the support 5 sticks to a tray 90. The tray 90 is controlled by the control unit previously mentioned. The tray 90 is made of a durable material, such as metal.

According to this embodiment, the ophthalmic lens is manufactured from the top to the bottom. The support 5 and the part 7 of the ophthalmic lens are simultaneously manufactured by additive manufacturing.

Figure 9a represents two first parts 91, 91' of two ophthalmic lenses manufactured with the support 5 by the additive manufacturing technology at a first stage of the step of manufacturing. The two first parts 91, 91' of the ophthalmic lenses comprise the peripheral region 31, 31' and the useful optical surface 33, 33'. The support 5 is formed with an assembly of two individual supports 50, 51. The individual support 50 upholds the part 91 of the ophthalmic lens and the individual support 51 upholds the part 91' of the ophthalmic lens. The support 5 is contacting the two first parts 91, 91' of the ophthalmic lenses only via the peripheral region 31, 31'.

Figure 9b shows the plurality of the ophthalmic lenses manufactured at a final stage of the step of manufacturing. The final ophthalmic lenses 95, 95' are obtained from the first parts 91, 91' by adding layers by additive manufacturing below the first parts 91, 91'. The final ophthalmic lens 95" is completely manufactured after the manufacturing of the final ophthalmic lenses 95, 95'. The support 5 is adapted to uphold more than two ophthalmic lenses as shown on Figure 9b. The support 5 is formed by an assembly of several individual supports 50, 51, 52. Each of the plurality of ophthalmic lenses is upheld by its own individual support 50, 51, 52. Each individual support 50, 51, 52 contacts with each other, allowing the manufacturing of the plurality of the ophthalmic lenses in any direction. The plurality of ophthalmic lenses is manufactured at once.

The final ophthalmic lens is directly obtained from the proposed manufacturing method. The final ophthalmic lens comprises two opposite faces and an edge extending between the two faces. The peripheral region of the final ophthalmic lens comprises at least a portion of the edge and a portion of at least one of the two faces.

In practice, the final ophthalmic lens is configured to be mounted in a rim of a frame. The rim has an inner face. In this case, the edge of the ophthalmic lens, extending between the two faces, substantially matches the inner face of the rim.

## Claims

1. Method for manufacturing an ophthalmic lens using an additive manufacturing technology, said ophthalmic lens having at least one useful optical surface (33; 33') and a peripheral region (31; 31') surrounding at least in part said useful optical surface (33; 33'), this peripheral region corresponding to a non-useful optical part, the method comprising the steps of:
- providing a support (5), **characterized in that** it further comprises the step of:
- manufacturing a part (7; 21; 23; 25; 91; 91') of the ophthalmic lens comprising a portion of said peripheral region (31; 31'), and being in contact with the support (5) by said portion of the peripheral region (31; 31') so that the support (5) bears the part (7; 21; 23; 25; 91; 91') of the ophthalmic lens being manufactured while said useful optical surface (33; 33') is free from any contact with the support (5).

2. Method according to claim 1, wherein said support (5) has a shape complementary to the portion of the peripheral region (31; 31') of the ophthalmic lens.

3. Method according to claim 1 or 2, wherein said support (5) sustains said part (7; 21; 23; 25; 91; 91') of the ophthalmic lens.

4. Method according to claim 3, wherein said part (7; 21; 23; 25; 91; 91') of the ophthalmic lens lies on a bearing surface of said support (5), the vertical line (L) going through the centre (G) of gravity of said part (7; 21; 23; 25; 91; 91') of the ophthalmic lens intersecting said bearing surface of the support (5).

5. Method according to claim 3 or 4, wherein the geometry or the orientation of the support (5) is arranged before the step of manufacturing the ophthalmic lens.

6. Method according to claim 3 or 4, wherein the orientation of the support (5) is continuously varied during the step of manufacturing the ophthalmic lens.

7. Method according to claim 1 or 2, wherein said support (5) upholds said part (7; 21; 23; 25; 91; 91') of the ophthalmic lens.

8. Method according to any of claims 1 to 7, wherein the ophthalmic lens further comprises a discontinuous linking portion between said part (7; 21; 23; 25; 91; 91') of the ophthalmic lens and said support (5).

9. Method according to any of claims 1 to 8, wherein the ophthalmic lens directly obtained from the manufacturing comprises two opposite faces and an edge extending between the two faces, the peripheral region (31; 31') comprising a portion of at least one of the two faces.

10. Method according to any of claims 1 to 8, wherein the ophthalmic lens is configured to be mounted in a rim of a frame, said rim having an inner face, wherein the ophthalmic lens directly obtained from the manufacturing comprises two opposite faces and an edge extending between the two faces, said edge substantially matching the inner face of the rim.

## Patentansprüche

1. Verfahren zur Fertigung einer ophthalmischen Linse unter Verwendung einer additiven Fertigungstechnologie, wobei die ophthalmische Linse mindestens eine brauchbare optische Oberfläche (33; 33') und eine periphere Region (31; 31') aufweist, welche die brauchbare optische Oberfläche (33; 33') mindestens teilweise umgibt, wobei diese periphere Region einem nicht-brauchbaren optischen Teil entspricht, wobei das Verfahren die Schritte umfasst:
- Bereitstellen eines Trägers (5), **dadurch gekennzeichnet, dass** es des Weiteren den Schritt umfasst:
- Fertigen eines Teils (7; 21; 23; 25; 91; 91') der ophthalmischen Linse, das einen Abschnitt der peripheren Region (31; 31') umfasst und durch jenen Abschnitt der peripheren Region (31; 31') in Kontakt mit dem Träger (5) ist, so dass auf dem Träger (5) das Teil (7; 21; 23; 25; 91; 91') der ophthalmischen Linse gelagert ist, das gefertigt wird, während die brauchbare optische Oberfläche (33; 33') frei von jeglichem Kontakt mit dem Träger (5) ist.

2. Verfahren nach Anspruch 1, wobei der Träger (5) eine Form hat, die komplementär zu dem Abschnitt der peripheren Region (31; 31') der ophthalmischen Linse ist.

3. Verfahren nach Anspruch 1 oder 2, wobei der Träger (5) das Teil (7; 21; 23; 25; 91; 91') der ophthalmischen Linse stützt.

4. Verfahren nach Anspruch 3, wobei das Teil (7; 21; 23; 25; 91; 91') der ophthalmischen Linse auf einer Lageroberfläche des Trägers (5) liegt, wobei die vertikale Linie (L), die durch ein Zentrum (G) der Schwerkraft des Teils (7; 21; 23; 25; 91; 91') der ophthalmischen Linse geht, die Lagerfläche des Trägers (5) schneidet.

5. Verfahren nach Anspruch 3 oder 4, wobei die Geometrie oder die Orientierung des Trägers (5) vor dem Schritt des Fertigens der ophthalmischen Linse hergerichtet wird.

6. Verfahren nach Anspruch 3 oder 4, wobei die Orientierung des Trägers (5) während des Schrittes des Fertigens der ophthalmischen Linse kontinuierlich variiert wird.

7. Verfahren nach Anspruch 1 oder 2, wobei der Träger (5) das Teil (7; 21; 23; 25; 91; 91') der ophthalmischen Linse hoch hält.

8. Verfahren nach einem der Ansprüche 1 bis 7, wobei die ophthalmische Linse des Weiteren einen diskontinuierlichen Verknüpfungsabschnitt zwischen dem Teil (7; 21; 23; 25; 91; 91') der ophthalmischen Linse und dem Träger (5) umfasst.

9. Verfahren nach einem der Ansprüche 1 bis 8, wobei die direkt aus der Fertigung erhaltene ophthalmische Linse zwei gegenüber liegende Flächen und einen Rand umfasst, der sich zwischen den beiden Flächen erstreckt, wobei die periphere Region (31; 31') einen Abschnitt von mindestens einer der beiden Flächen umfasst.

10. Verfahren nach einem der Ansprüche 1 bis 8, wobei die ophthalmische Linse ausgestaltet ist, um in eine Fassung eines Gestells montiert zu werden, wobei die Fassung eine Innenfläche hat, wobei die direkt aus der Fertigung erhaltene ophthalmische Linse zwei gegenüber liegende Flächen und einen Rand umfasst, der sich zwischen den beiden Flächen erstreckt, wobei der Rand im Wesentlichen der Innenfläche der Fassung entspricht.

## Revendications

1. Procédé destiné à fabriquer une lentille ophtalmique au moyen d'une technologie de fabrication additive, ladite lentille ophtalmique ayant au moins une surface optique utile (33 ; 33') et une région périphérique (31 ; 31') entourant au moins en partie ladite surface optique utile (33 ; 33'), cette région périphérique correspondant à une partie optique non utile, le procédé comprenant les étapes suivantes :
- obtention d'un support (5), **caractérisé en ce qu'**il comprend en outre l'étape suivante :
- fabrication d'une partie (7 ; 21 ; 23 ; 25 ; 91 ; 91') de la lentille ophtalmique comprenant une portion de ladite région périphérique (31 ; 31'), et étant en contact avec le support (5) par ladite portion de la région périphérique (31 ; 31') de telle sorte que le support (5) porte la partie (7 ; 21 ; 23 ; 25 ; 91 ; 91') de la lentille ophtalmique en train d'être fabriquée pendant que ladite surface optique utile (33 ; 33') est libre de tout contact avec le support (5).

2. Procédé selon la revendication 1, dans lequel ledit support (5) a une forme complémentaire de la portion de la région périphérique (31 ; 31') de la lentille ophtalmique.

3. Procédé selon la revendication 1 ou 2, dans lequel ledit support (5) soutient ladite partie (7 ; 21 ; 23 ; 25 ; 91 ; 91') de la lentille ophtalmique.

4. Procédé selon la revendication 3, dans lequel ladite partie (7 ; 21 ; 23 ; 25 ; 91 ; 91') de la lentille ophtalmique repose sur une surface d'appui dudit support (5), la ligne verticale (L) passant par le centre (G) de gravité de ladite partie (7 ; 21 ; 23 ; 25 ; 91 ; 91') de la lentille ophtalmique coupant ladite surface d'appui du support (5).

5. Procédé selon la revendication 3 ou 4, dans lequel la géométrie ou l'orientation du support (5) est prévue avant l'étape de fabrication de la lentille ophtalmique.

6. Procédé selon la revendication 3 ou 4, dans lequel l'orientation du support (5) est modifiée de façon continue pendant l'étape de fabrication de la lentille ophtalmique.

7. Procédé selon la revendication 1 ou 2, dans lequel ledit support (5) maintient par le haut ladite partie (7 ; 21 ; 23 ; 25 ; 91 ; 91') de la lentille ophtalmique.

8. Procédé selon l'une quelconque des revendications 1 à 7, dans lequel la lentille ophtalmique comprend en outre une portion de liaison discontinue entre ladite partie (7 ; 21 ; 23 ; 25 ; 91 ; 91') de la lentille ophtalmique et ledit support (5).

9. Procédé selon l'une quelconque des revendications 1 à 8, dans lequel la lentille ophtalmique directement obtenue à partir de la fabrication comprend deux faces opposées et un bord s'étendant entre les deux faces, la région périphérique (31 ; 31') comprenant une portion d'au moins une des deux faces.

10. Procédé selon l'une quelconque des revendications 1 à 8, dans lequel la lentille ophtalmique est configurée pour être montée dans un cercle d'une monture, ledit cercle ayant une face interne, dans lequel la lentille ophtalmique directement obtenue à partir de la fabrication comprend deux faces opposées et un bord s'étendant entre les deux faces, ledit bord s'ajustant sensiblement à la face interne du cercle.
